# EUROPÄISCHE PATENTSCHRIFT

(11) **EP 0 865 869 B1**
(45) Veröffentlichungstag und Bekanntmachung des Hinweises auf die Patenterteilung: **02.05.2002**
(21) Anmeldenummer: 97122275.7
(22) Anmeldetag: 17.12.1997
(51) Int. Cl.: B23Q 37/00

(54) **Automationszelle zur Handhabung von Teilen**
Automation system for handling workpieces
Cellule d'automatisation pour manipuler des pieces

(30) Priorität: 22.03.1997 DE 19712116; 17.05.1997 DE 19720906
(43) Veröffentlichungstag der Anmeldung: 23.09.1998
(73) Patentinhaber: FELSOMAT GmbH & Co. KG, D-75203 Königsbach-Stein (DE)
(72) Erfinder: Jäger, Helmut F., 75203 Königsbach-Stein (DE); Schenker, Christian, 76327 Pfinztal (DE); Peschina, Jürgen, 75438 Knittlingen (DE)
(74) Vertreter: Gahlert, Stefan, Dr.-Ing.

(56) Entgegenhaltungen:
- EP-A- 0 673 711
- EP-A- 0 743 137
- WO-A-89/11375
- DE-A- 3 732 559
- DE-A- 4 212 178
- FR-A- 2 249 740
- US-A- 5 353 490

## Beschreibung

Die Erfindung betrifft eine Automationszelle zur Handhabung von Teilen, mit einem Bereitstellungsmodul zur Bereitstellung und zur Aufnahme von Teilen, und mit mindestens einem weiteren Funktionsmodul zur Handhabung von Teilen, wobei ein ortsfest in Einbaulage abstützbarer Sockelmodul vorgesehen ist, an dem der Bereitstellungsmodul und der zumindest eine weitere Funktionsmodul befestigt sind.

Eine derartige Automationszelle ist aus der DE-A-42 12 178 bekannt. Hierbei handelt es sich um eine automatisierte Montageeinrichtung mit z.B. einem Manipulationsroboter, einem Montagewerkzeug und einer Montagestation für ein zu komplettierendes Werkstück sowie mit Werkstücktransportmitteln. Die Montageeinrichtung ist als portable Montagezelle ausgebildet, mit einem eckigen Grundrahmen und einem diesem angepaßten oberen Rahmen, die mindestens an ihren Ecken durch senkrechte Streben miteinander verbunden sind. Die Montagezelle weist ferner Anschlußbereiche für weitere Werkstückzuführungen und Werkstückabführungen auf, wozu beispielsweise ein Palettiergerät an den Grundrahmen der Montagezelle von außen angeflanscht werden kann.

Eine weitere, aus der US-A-5 353 490 bekannte modular aufgebaute Montageplattform weist eine Mehrzahl von Industrierobotern auf, die auf einer speziell ausgebildeten Plattform montiert sind, die als ausgesteifte Sockelkonstruktion ausgeführt ist.

Eine aus der EP-A-0 673 711 bekannte Automationszelle dient zur Zuführung von Werkstücken an eine nachgeordnete Bearbeitungseinrichtung und umfaßt einen Arbeitsraum, der durch eine Schutzwand nach außen abgeschlossen ist und innerhalb dessen eine Stapelbereitstellungsvorrichtung zum Bereitstellen von Teilen sowie eine dieser zugeordneten Ladevorrichtung zur Übernahme von Teilen, sowie eine Stapelwechseleinheit zur Zuführung und Entnahme von Werkstückträgerstapeln in bzw. aus dem Arbeitsraum angeordnet ist.

Über die Anordnung und Montage der einzelnen Funktionsmodule innerhalb des Arbeitsraumes der Automationszelle sind keine Angaben gemacht. Grundsätzlich werden jedoch die einzelnen Funktionsmodule bei der Endmontage an ihrem vorgesehenen Platz aufgestellt und dabei auf dem Fundament ausgerichtet und verankert. Allenfalls ist es denkbar, daß bei einer Vormontage und bei einem Testlauf beim Hersteller der Automationszelle zunächst die Einzelkomponenten auf einem aus Einzelstreben zusammengeschweißten Gestell montiert und geprüft werden. Anschließend müssen die Einzelkomponenten wegen ihres zum Teil erheblichen Gewichtes und wegen ihrer Empfindlichkeit wieder demontiert werden und können erst bei der Endmontage in einer Fertigungshalle, in der die Automationszelle endgültig aufgestellt wird, wieder an dem Gestell befestigt werden. Da das Gestell jedoch als einfache Schweißkonstruktion ausgeführt ist, ist bei der Endmontage eine genaue Justierung und Ausrichtung der Einzelkomponenten in ihrer Absolutlage bzw. Relativlage zueinander erforderlich, um ein reibungsloses Zusammenarbeiten der Einzelkomponenten miteinander und mit weiteren Automationszellen oder einer jeweiligen Bearbeitungseinrichtung zu gewährleisten, die von der betreffenden Automationszelle versorgt werden soll.

Es versteht sich, daß derartige Montage- und Justierarbeiten außerordentlich zeitaufwendig und kostenintensiv sind.

Darüber hinaus ist der Transport und die getrennte Verpackung von einzelnen Modulen und die nachfolgende Montage und Ausrichtung dieser Module außerordentlich aufwendig und teuer.

Der Erfindung liegt die Aufgabe zugrunde, eine verbesserte Automationszelle zur Handhabung von Teilen mit mindestens einem Bereitstellungsmodul zur Bereitstellung und Aufnahme von Teilen und mindestens einem weiteren Funktionsmodul zur Handhabung von Teilen zu schaffen, die möglichst einfach und platzsparend aufgebaut ist.

Diese Aufgabe wird bei einer Automationszelle gemäß der eingangs genannten Art erfindungsgemäß dadurch gelöst, daß der Sockelmodul mit einem vertikalen Ständer kombiniert ist, an dem der Bereitstellungsmodul aufgenommen ist, und daß am Ständer eine Horizontalachse und/oder eine Vertikalachse zum Antrieb des Bereitstellungsmoduls vorgesehen ist.

Auf diese Weise wird eine besonders einfache Ausführung der Automationszelle erreicht, die darüber hinaus einen besonders platzsparenden Aufbau besitzt. Dabei kann der Bereitstellungsmodul auch mit dem Sockelmodul integriert ausgeführt sein.

Insbesondere wenn der Bereitstellungsmodul mit einem Linearantrieb ausgestattet ist, läßt sich auf diese Weise sogar eine noch weitere Reduzierung der Baugröße der Automationszelle erreichen.

Gemäß einer Weiterbildung der Erfindung ist der Sockelmodul als derart stabile und verwindungssteife Konstruktion ausgeführt, daß die Relativlage des Bereitstellungsmoduls und des zumindest einen weiteren Funktionsmoduls bei einer Vormontage ausreichend genau zueinander bestimmbar ist, ohne daß in der Einbaulage eine aufwendige Endjustierung der einzelnen Module zueinander erfolgen muß.

Hierdurch wird ein vereinfachter Transport und eine vereinfachte Endmontage und eine hohe Präzision im Betrieb der Automationszelle gewährleistet.

In bevorzugter Weiterbildung weist die Automationszelle standardisierte mechanische und/oder elektrische Schnittstellen auf, die vorzugsweise am Sockelmodul und an den Funktionsmodulen zur modulalen Verbindung vorgesehen sind.

Dieses Merkmal ist auch selbständig schutzfähig, unabhängig davon, ob die Automationszelle einen verwindungssteifen Sockelmodul zur Aufnahme der übrigen Komponenten aufweist oder ob die einzelnen Funktionsmodule lediglich unmittelbar aneinander befestigt werden.

Auf diese Weise ist ein Aufbau einer gewünschten Automationszelle aus einzelnen Funktionsmodulen in besonders einfacher Weise realisierbar, da einzelne Funktionsmodule ohne weiteres an den mechanischen Schnittstellen der an der Zelle bereits vorhandenen Funktionsmodule angekoppelt und ausgerichtet werden können. Ein zusätzlicher Vorteil ergibt sich dann, wenn die einzelnen Funktionsmodule mit standardisierten elektrischen (elektronischen) Schnittstellen versehen sind, durch die die einzelnen Funktionsmodule elektrisch bzw. elektronisch miteinander gekoppelt werden können und von einer einheitlichen, vorzugsweise gleichfalls modular aufgebauten Steuerung gesteuert werden können.

Unter dem Begriff elektrische Schnittstelle soll hier in diesem Zusammenhang ganz allgemein sowohl eine einfache elektrische Steckverbindung, als auch eine hardwaremäßig genormte Schnittstelle, also z.B. eine RS232-Schnittstelle, als auch eine Software-Schnittstelle verstanden werden.

In zusätzlicher Weiterbildung der Erfindung weist der Sockelmodul eine als Ölauffangwanne ausgebildete Oberfläche auf.

Diese Maßnahme hat den Vorteil, daß der Sockelmodul auf diese Weise zweifach genutzt wird. Da der Sockelmodul ohnehin die Bodenfläche der Automationszelle bildet, bietet es sich an, den Sockelmodul gleichzeitig auch als Ölauffangwanne auszubilden, um so an den zu handhabenden Teilen anhaftendes Öl bzw. Emulsionsmittel und Späne aufzufangen und in geeigneter Weise rückführen zu können. Dies führt zu einer Reduzierung der Umweltbelastung und zu erheblicher Kosteneinsparung durch Vermeidung von Öl- und Emulsionsverlusten. Bei herkömmlichen Automationszellen wurden Tropfverluste von den Teilen bisher in Kauf genommen, was mit einer entsprechenden Umweltbelastung verbunden war bzw. Späneförderer, Werkstückreinigungseinrichtungen und dergleichen erforderlich machte.

In vorteilhafter Weiterbildung der Erfindung weist der Sockelmodul Kabelführungen zur Aufnahme von Leitungen auf.

Diese Maßnahme hat den Vorteil, daß die zur Versorgung der einzelnen Funktionsmodule der Automationszelle notwendigen Leitungen, wie etwa Drehstromleitungen, elektrische Steuerleitungen, Pneumatik- oder Hydraulikleitungen im Sockelmodul geführt werden können, wodurch der Installationsaufwand bei der Endmontage deutlich reduziert wird und gleichzeitig eine besonders gegen Umwelteinwirkungen geschützte Verlegung der entsprechenden Leitungen ermöglicht wird.

In weiterer Ausgestaltung der Erfindung enthält die Automationszelle als weiteren Funktionsmodul zumindest ein Stapelaustauschmodul oder ein Portalmodul, die an dem Sockelmodul befestigt sind.

Je nach dem Einsatzzweck der Automationszelle können in an sich bekannter Weise verschiedene Funktionsmodule in der Automationszelle enthalten sein. Diese sind vorteilhafterweise jeweils auf dem Sockelmodul befestigt oder zumindest an diesem ausgerichtet. So ist es bei einem Portalmodul beispielsweise möglich, diesen unmittelbar auf dem Sockelmodul zu befestigen oder mit entsprechenden Vertikalstreben neben dem Sockelmodul abzustützen, wobei vorzugsweise jedoch wiederum eine Verbindung mit dem Sockelmodul erfolgt, um die Relativlage zu den übrigen Modulen der Automationszelle auf diese Weise vorzugeben.

Gemäß einer weiteren Ausgestaltung der Erfindung ist eine Schutzverkleidung vorgesehen, die an dem Sockelmodul befestigt ist.

Da derartige Automationszellen in der Regel aus Gründen des Unfallschutzes mit einer vollständigen Schutzverkleidung versehen werden müssen, ist es vorteilhaft, diese unmittelbar am Sockelmodul zu befestigen oder den Sockelmodul selbst teilweise als Schutzverkleidung zu benutzen.

Gemäß einer weiteren Ausgestaltung der Erfindung ist ein Steuerungsmodul zur Steuerung der Automationszelle vorgesehen, der an dem Sockelmodul befestigt ist.

Diese Maßnahme ist insbesondere in Verbindung mit der Nutzung des Sockelmoduls zur Führung von Leitungen von Vorteil, da auf diese Weise Leitungswege verkürzt werden und der Montageaufwand vermindert werden kann.

Gemäß einer weiteren Ausgestaltung der Erfindung weist der Sokkelmodul Aufhängepunkte zur Befestigung an einem Hebezeug auf.

Auf diese Weise wird die Verladung und der Transport der Automationszelle als kompakte, weitgehend komplett montierte Einheit erleichtert.

In zusätzlicher Weiterbildung der Erfindung weist der Sockelmodul an einer Mehrzahl von vorgegebenen Stellen Anschlußpunkte zur Aufnahme verschiedener Funktionsmodule auf.

Der Sockelmodul ist somit an zahlreichen Stellen mit Anschlußpunkten oder Funktionsflächen zur Aufnahme verschiedener Funktionsmodule versehen. Somit wird eine standardisierte Herstellung von Sockelmodulen ermöglicht, auf denen dann je nach der gewünschten Ausführung der Automationszelle die verschiedenen Funktionsmodule nach der Art eines Baukastens zusammengestellt werden können. Auf diese Weise ist auch die nachträgliche Umrüstung oder Erweiterung einer Automationszelle auf einfache Weise ermöglicht.

Gemäß einer weiteren vorteilhaften Ausgestaltung der Erfindung ist der Sockelmodul als Guß- oder als Schweißkonstruktion mit Versteifungsstreben ausgeführt.

Insbesondere bei einer Ausführung als Schweißkonstruktion mit Versteifungsstreben in der Art, wie sie bei der Konstruktion eines Bettes für eine Werkzeugmaschine bekannt ist, ergibt sich eine ausreichend steife und besonders gewichtssparende Konstruktion.

Gemäß einer Weiterbildung der Erfindung kann der Sockelmodul mit dem Ständer zu einer L-Form kombiniert sein, während gemäß einer weiteren Ausführung der Sockelmodul mit einem ersten und einem zweiten gegenüberliegenden Ständer zu einer U-Form kombiniert ist.

Bei der Ausführung als L-Form ergibt sich ein besonders einfacher Aufbau, während es bei der Ausführung als U-Form ermöglicht wird, den Funktionsmodul an beiden gegenüberliegenden Ständern abzustützen, was insbesondere bei höherer Belastung von Vorteil ist.

Grundsätzlich ist es bevorzugt, auch hierbei den Sockelmodul und den oder die Ständer ausreichend stabil und verwindungssteif auszuführen, so daß keine weitere Justierung der einzelnen Funktionsmodule in der Einbaustellung erforderlich ist.

Gemäß einer weiteren Ausführung der Erfindung ist der Bereitstellungsmodul zwischen dem ersten und dem zweiten Ständer angeordnet und an beiden Ständern abgestützt und vorzugsweise auch von beiden Ständern angetrieben.

Auf diese Weise läßt sich eine höhere Tragkraft bei trotzdem kleiner Baugröße verwirklichen.

Es versteht sich, daß der oder die Ständer mit dem Sockelmodul lösbar verbunden sein können, z.B. damit verschraubt sein können, oder daß statt dessen Sockelmodul und Ständer als einstükkige Konstruktion, z.B. als Schweißkonstruktion, ausgeführt sein können. Auf jeden Fall sind Ständer und Sockelmodul starr miteinander verbunden und weisen vorzugsweise eine entsprechende Festigkeit und Verwindungssteifheit auf, um eine zusätzliche Abstützung und Justierung der einzelnen Funktionsmodule überflüssig zu machen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine Aufsicht einer ersten Ausführung einer nicht zur Erfindung gehörenden Automationszelle in stark vereinfachter Darstellung und
- Fig. 2: eine Ansicht der Automationszelle gemäß Fig. 1;
- Fig. 3: eine Ansicht einer erfindungsgemäßen Automationszelle;
- Fig. 4: eine stark vereinfachte schematische Seitenansicht einer weiteren Ausführung einer nicht zur Erfindung gehörenden Automationszelle, wobei lediglich der Sockelmodul mit Ständer und Bereitstellungsmodul dargestellt wurde, jedoch auf die Darstellung von weiteren Funktionsmodulen, wie Stapelwechselmodul und Portalmodul verzichtet wurde;
- Fig. 5: eine Ansicht der Automationszelle gemäß Fig. 4 von der Seite und
- Fig. 6: eine schematische perspektivische Ansicht eines Sokkelmoduls mit rasterartig angeordneten Schnittstellen zur mechanischen und elektrischen Verbindung mit anderen Funktionsmodulen.

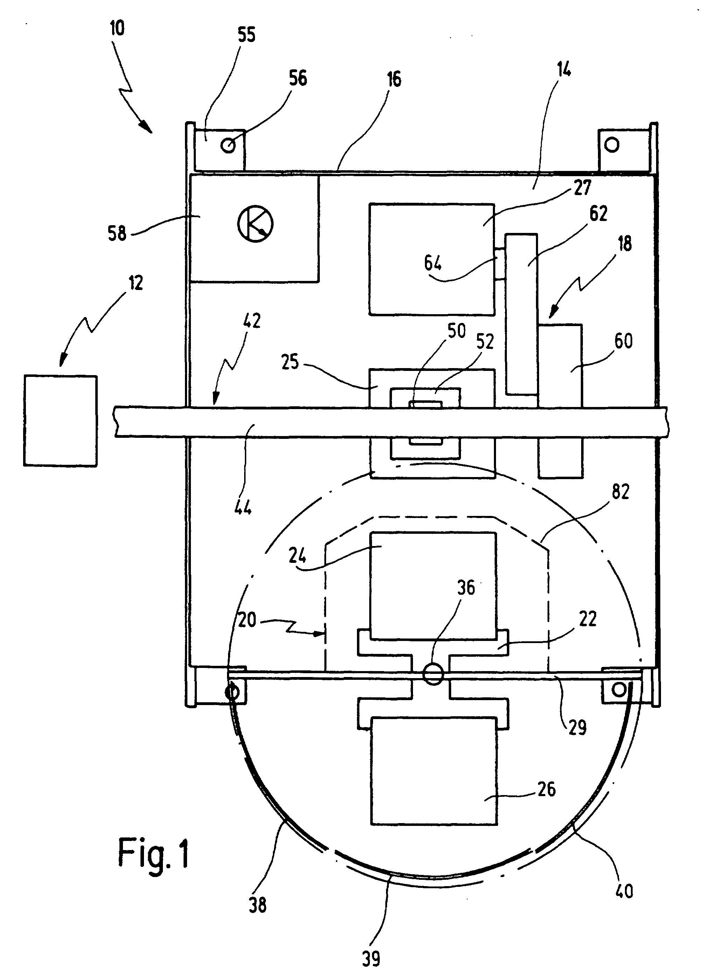

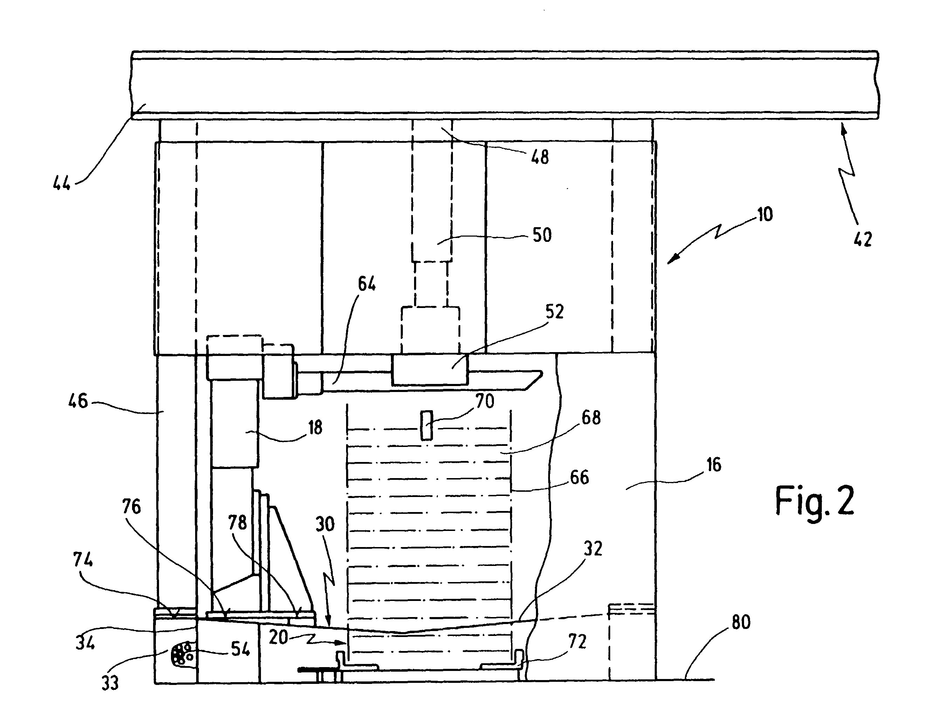

In den Fig. 1 und 2 ist eine nicht zur Erfindung gehörende Automationszelle dargestellt und insgesamt mit der Ziffer 10 bezeichnet.

Die Automationszelle 10 ist als kompakte Zelle ausgeführt, die auf einem gemeinsamen Sockelmodul 30 gemäß Fig. 2 montiert ist, an dem alle Komponenten befestigt sind. An diesem Sockelmodul 30 ist eine Schutzverkleidung 16 befestigt, durch die ein Arbeitsraum 14 nach außen abgegrenzt ist. Oberhalb des Arbeitsraumes 14 verläuft ein Portalmodul 42, das gleichfalls auf dem Sockelmodul mittels Vertikalstreben 46 befestigt ist. Auf dem Portalmodul 42 ist ein Schlitten, der lediglich durch die Ziffer 48 angedeutet ist, gesteuert verfahrbar. An dem Schlitten 48 ist eine Z-Achse 50 vorgesehen, an der ein in Vertikalrichtung verfahrbarer Greifermodul 52 befestigt ist, mittels dessen einzelne Teile 70 übernommen werden können und durch Verfahren auf dem Portal 44 zu einer anderen Automationszelle oder zu einer Bearbeitungseinrichtung 12 gemäß Fig. 1 verfahren werden können, die über die Automationszelle 10 mit Teilen 70 versorgt wird. Innerhalb des Arbeitsraumes 14 der Automationszelle 10 ist ein Bereitstellungsmodul 18 der aus der EP-A-0 635 339 bekannten Art angeordnet, um Werkstückträger 68 zwischen einem Bereitstellungsplatz 24 an einem Ende der Automationszelle 10 und einem Warteplatz 27 am gegenüberliegenden Ende der Automationszelle 10 umsetzen zu können oder aber zu einem erhöhten Zuführplatz 25 in der Mitte zwischen dem Bereitstellungsplatz 24 und dem Warteplatz 27 unterhalb des Portals 44 überführen zu können, so daß in dieser erhöhten Position unterhalb des Portals 44 mittels des Greifermoduls 52 Teile 70 aus einem in dieser Position befindlichen Werkstückträger 68 entnommen werden können oder aber in diesen eingelegt werden können.

Der Bereitstellungsmodul 18 umfaßt zwei miteinander zwangsgekoppelte Schwingen 60, 62, die derart dimensioniert sind, daß sich beim Verdrehen der ersten Schwinge 60 eine etwa U-förmige Bewegungsbahn ergibt, so daß das Umstapeln von Werkstückträgern 68 von einem Werkstückträgerstapel 66 etwa auf dem Bereitstellungsplatz 24 zum Warteplatz 27 und umgekehrt mittels nur einer numerisch gesteuerten Achse - der Drehachse der ersten Schwinge 60 - möglich ist.

An der zweiten Schwinge 62 des Bereitstellungsmoduls 18, die von der ersten Schwinge 60 angetrieben ist, ist gemäß Fig. 2 ein Greifermodul 64 mit einem Ausleger vorgesehen, der zur Aufnahme von Werkstückträgern 68 geeignet ist.

Zum Ein- und Ausschleusen von Werkstückträgerstapeln 96 in bzw. aus dem Arbeitsraum 14 ist ein insgesamt mit der Ziffer 20 bezeichneter Stapelaustauschmodul vorgesehen, der eine um eine vertikale Drehachse 36 verdrehbare Dreheinheit 22 aufweist, so daß Werkstückträgerstapel 66 durch Verdrehen der Dreheinheit 22 zwischen einem Ladeplatz 26 außerhalb des Arbeitsraumes 14 und dem gegenüberliegenden Bereitstellungsplatz 24 innerhalb des Arbeitsraumes 14 austauschbar sind.

Zwischen dem Bereitstellungsplatz 24 und dem diesen gegenüberliegenden Ladeplatz 26 außerhalb des Arbeitsraumes 14 befindet sich eine mit der Ziffer 29 angedeutete Schottwand, durch die der Arbeitsraum 14 nach außen abgeschlossen ist. Durch Verdrehen der Dreheinheit 22 um 180° lassen sich so Werkstückträgerstapel 66 von dem Ladeplatz 26 zu dem Bereitstellungsplatz 24 innerhalb des Arbeitsraumes 14 überführen oder von dem Bereitstellungsplatz 24 aus dem Arbeitsraum zu dem Ladeplatz 26 überführen. Dabei ist der Bereich der Dreheinheit 22 außerhalb des Arbeitsraumes 14 durch Verkleidungselemente 38, 39, 40 vollständig nach außen abgegrenzt. In der Mitte ist ein um die vertikale Drehachse 36 verschwenkbares Verkleidungselement 39 vorgesehen, das sich über einen Winkel von etwa 60 bis 70 erstreckt und das an beiden Seiten durch je ein um die vertikale Drehachse 36 verschwenkbar angeordnetes Verkleidungselement 38, 40 zu einer vollständig nach außen abgeschlossenen Verkleidung ergänzt ist. Das linke Verkleidungselement 38 und das rechte Verkleidungselement 40 lassen sich jeweils in Richtung vor das mittlere Verkleidungselement 39 um die vertikale Drehachse 36 verschwenken, während das mittlere Verkleidungselement 39 wahlweise im Uhrzeigersinn oder im Gegenuhrzeigersinn vor das Verkleidungselement 38 oder vor das Verkleidungselement 40 verschwenkbar ist, um in der geöffneten Position einen Zugang zum Ladeplatz 26 von vorn zu ermöglichen, um Werkstückträgerstapel 66 auf den Ladeplatz 26 überführen oder von diesem entnehmen zu können.

Dabei ist der Stapelaustauschmodul 20 derart ausgeführt, daß die Dreheinheit 22 als etwa H-förmiges Drehgestell ausgebildet ist, das zur Aufnahme von Werkstückträgerstapeln 66 ausgebildet ist, die auf Bodenrollen in den Ladeplatz 26 eingefahren werden und dort verriegelt werden (vergleiche Fig. 2). Der Transport des Werkstückträgerstapels 66 geschieht hierbei auf den Bodenrollen bei Vertaktung der Dreheinheit in eine um 180 verdrehte Position, um so einen Werkstückträgerstapel 66 vom Ladeplatz 26 auf den Bereitstellungsplatz 24 zu überführen oder umgekehrt. Hierzu ist also keine zusätzliche Transportvorrichtung erforderlich. Auch während des Wechsels zwischen den beiden Positionen bleibt der Werkstückträgerstapel 66 auf den Bodenrollen stehen, so daß die Dreheinheit 22 lediglich zur Aufnahme der seitlichen Stützkräfte und des Drehantriebes ausgelegt sein muß, nicht jedoch zur Aufnahme des Gewichtes des Werkstückträgerstapels 66 und der Werkstücke.

In alternativer Weise kann die Dreheinheit 22 derart ausgeführt sein, daß die Werkstückträgerstapel unmittelbar auf der Dreheinheit 22 aufgesetzt werden und nicht auf Bodenrollen laufen.

Durch Kombination des Bereitstellungsmoduls 18, des Stapelaustauschmoduls 20, des Portalmoduls 42 mit dem daran verfahrbaren Schlitten 48 mit Z-Achse 50 und daran befestigtem Greifermodul 52 lassen sich somit Teile 70 von dem Ladeplatz 26 außerhalb des Arbeitsraumes 14 zunächst in den Arbeitsraum 14 überführen und sodann in geeigneter Weise gegebenenfalls auf dem Warteplatz 27 umstapeln, von dem Zuführplatz 25 aus mittels des Greifermoduls 52 übernehmen und sodann zur Bearbeitungseinrichtung 12 überführen.

Es versteht sich, daß der Stapelaustauschmodul 20 lediglich wahlweise vorgesehen ist, und daß statt dessen auch ein manuelles Ein- bzw. Ausschleusen von Werkstückträgern bzw. Werkstückträgerstapeln in den Arbeitsraum 14 möglich ist.

Gemäß Fig. 2 dient der Sockelmodul 30 als Basis für den Aufbau sämtlicher Funktionsmodule der Automationszelle 10. Der Sockelmodul 30 ist hierbei als verwindungssteife Schweißkonstruktion nach der Art eines Maschinenbettes für eine Werkzeugmaschine ausgeführt und durch geeignete Versteifungsstreben 34 ausgesteift. Dabei ist der Sockelmodul 30 derart stabil und verwindungssteif ausgeführt, daß sämtliche Funktionsmodule einschließlich der Vertikalstreben 46 des Portalmoduls 42 und des Stapelaustauschmoduls 20 bereits beim Hersteller der Automationszelle 10 auf dem Sockelmodul 30 an geeigneten Anschlußpunkten 74, 76, 78 montiert und relativ zueinander justiert werden können. Lediglich das Drehgestell 22 des Stapelaustauschmoduls 20 wird in besonderen Fällen zusätzlich bei der Endmontage auf dem Fundament 80 abgestützt.

Bei der Ausführung des Stapelaustauschmoduls 20, bei der das Drehgestell 22 auch zur Unterstützung bzw. Aufnahme von Werkstückträgerstapeln vorgesehen ist (kleinere Baugröße), wird der Stapelaustauschmodul 20 direkt am Sockelmodul befestigt.

Werden dagegen Bodenrollen gemäß Fig. 2 verwendet, so befindet sich eine entsprechend geformte Ausnehmung am Sockelmodul 30, die in Fig. 1 schematisch durch die gestrichelte Linie 82 angedeutet ist.

Um einen Transport der vormontierten Automationszelle 10 zu erleichtern, sind an den vier Ecken des Sockelmoduls 30 jeweils Laschen 55 mit Aufhängepunkten 56 angeflanscht wobei auch Ösen vorgesehen sein können, um ein Einhängen von Hebezeugen zu ermöglichen.

Gemäß Fig. 2 weist der Sockelmodul 30 einen grundsätzlich rechteckförmigen Querschnitt auf, ist an seiner Oberseite jedoch mit zwei zur Mitte hin leicht geneigt verlaufenden Flächen versehen, so daß sich insgesamt eine V-förmige Oberfläche 32 ergibt, die als Ölauffangwanne ausgebildet ist. Vorzugsweise randseitig ist der Sockelmodul 30 mit Kabelführungen 33 oder Kabelkanälen versehen, in denen wie in Fig. 2 schematisch angedeutet, elektrische Leitungen und/oder Pneumatik-/Hydraulikleitungen geführt sein können.

Wie aus Fig. 1 zu ersehen ist, ist eine zentrale Steuereinheit 58 vorgesehen, die vorzugsweise gleichfalls direkt am Sockelmodul 30 befestigt ist. Durch die Kabelführung innerhalb des Sokkelmoduls 30 und die unmittelbare Montage der Steuereinheit 58 am Sockelmodul 30 wird insgesamt der Verdrahtungsaufwand beim Anschluß der Kraftstrom und Steuerleitungen und sonstigen Leitungen zu den einzelnen Funktionsmodulen deutlich reduziert.

An der Oberfläche des Sockelmoduls 30 ist, wie zuvor bereits erwähnt, eine Mehrzahl von Anschlußpunkten 74, 76, 78 vorgesehen, wobei nur einige dieser Anschlußpunkte schematisch in Fig. 2 dargestellt sind. Darüber hinaus sind vorzugsweise auf dem Sockelmodul 30 weitere Anschlußpunkte bzw. Funktionsflächen an vorbestimmten Stellen vorgesehen, um so einen modularen baukastenartigen Aufbau der Automationszelle 10 zu erleichtern und um ein Nachrüsten mit einzelnen Funktionsmodulen vorzubereiten. Darüber hinaus können in entsprechender Weise an den vier umlaufenden Rändern des Sockelmoduls 30 Anschlußpunkte oder Funktionsflächen vorgesehen sein, um eine modulare Verbindung mit weiteren Automationszellen oder anderen Funktionsmodulen vorzubereiten. Während in Fig. 2 eine Befestigung der Vertikalstreben 46 des Portalmoduls 42 unmittelbar auf den Anschlußpunkten 74 des Sockelmoduls 30 dargestellt ist, versteht es sich, daß der Portalmodul 42 natürlich auch auf dem Fundament 80 abgestützt sein kann. Vorzugsweise ist hierbei jedoch die Relativlage zum Sockelmodul 30 durch entsprechende Anschlußpunkte 30 am Sockelmodul fixiert.

Es versteht sich, daß das an den Vertikalstreben 46 befestigte Portal gegebenenfalls erst bei der Endmontage an Ort und Stelle montiert wird, um keine unnötige Vergrößerung des Transportvolumens zu verursachen. Das gleiche gilt für diesen Fall natürlich auch für den Schlitten 48 mit Z-Achse und Greifermodul 52.

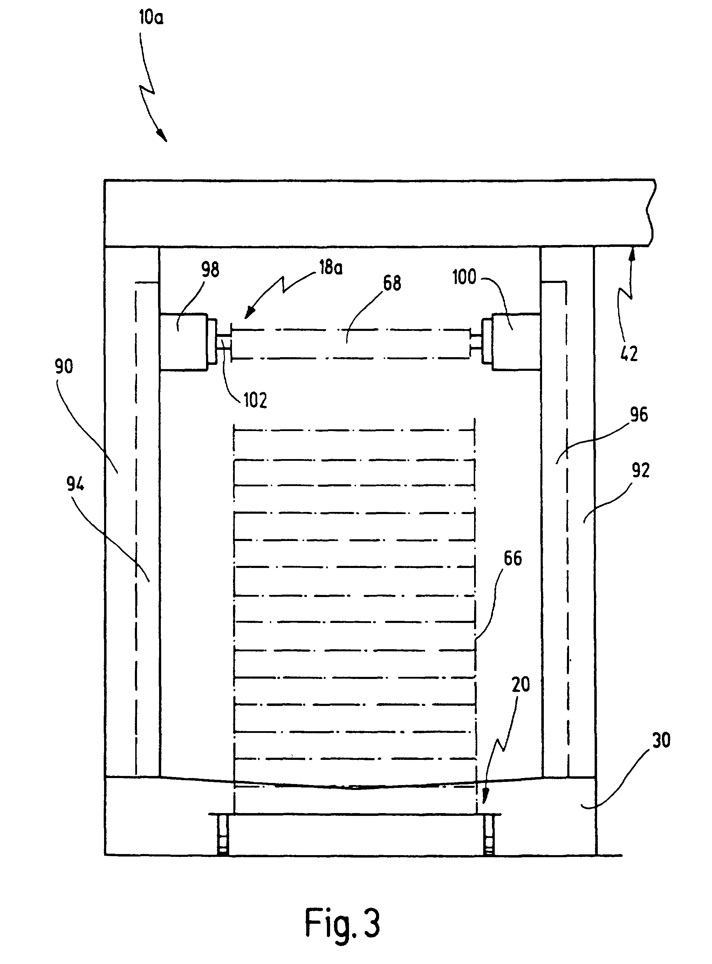

In Fig. 3 ist eine erfindungsgemäße Ausführung einer Automationszelle dargestellt und insgesamt mit der Ziffer 10a bezeichnet.

Für entsprechende Teile werden hierbei gleiche Bezugsziffern verwendet.

Im Unterschied zu der zuvor beschriebenen Ausführung ist hierbei der Bereitstellungsmodul, der insgesamt mit der Ziffer 18a bezeichnet ist, nicht als Einrichtung mit getrieblich miteinander zwangsgekoppelten Schwingen ausgeführt, sondern statt dessen ist ein Kreuzschlitten vorgesehen.

Des weiteren ist an beiden einander gegenüberliegenden Rändern des Sockelmoduls 30 jeweils ein vertikaler Ständer 90, 92 fest mit dem Sockelmodul 30 verbunden, der jeweils ausreichend verwindungssteif ausgeführt ist, um eine Aufnahme des Bereitstellungsmoduls 18a zu ermöglichen.

Zusätzlich ist hierbei noch das Portal 42 am oberen Ende in Fig. 3 dargestellt, das mit den Ständern 90, 92 verbunden ist und somit zusätzliche Stabilität verleiht. Die beiden Ständer 90, 92 dienen hierbei gleichzeitig als Stützen für das Portal 42.

In beiden Ständern 90, 92 ist jeweils eine vertikale, numerisch gesteuerte Achse 94, 96 integriert. An jeder der Vertikalachsen ist eine Horizontalachse 98, 100 befestigt, die gleichfalls numerisch gesteuert ist. Zwischen den beiden so einander gegenüberliegenden horizontalen Achsen 98, 100 ist ein Greifermodul 102 zur Aufnahme von Werkstückträgern 68 befestigt.

Es versteht sich, daß in einer einfacheren Ausführung anstelle von jeweils zwei einander gegenüberliegenden Kreuzschlitten auch nur ein einziger Kreuzschlitten bei einer L-förmigen Konfiguration mit einem Ständer und Sockelmodul vorgesehen sein könnte oder in einer noch weiter vereinfachten Ausführung lediglich ein Horizontalschlitten, der an einem Ständer vorgesehen ist. Bei dieser letzten Ausführung würde der Horizontalschlitten lediglich zur Verschiebung von Werkstückträgern dienen, während die weitere Aufnahme und Übergabe dann mittels eines Greifers vom Portalmodul aus erfolgen könnte.

Insgesamt läßt sich mit dieser erfindungsgemäßen Ausführung eine verringerte Baubreite der Automationszelle erreichen, da sich jeweils eine Linearachse in einen Ständer integrieren läßt.

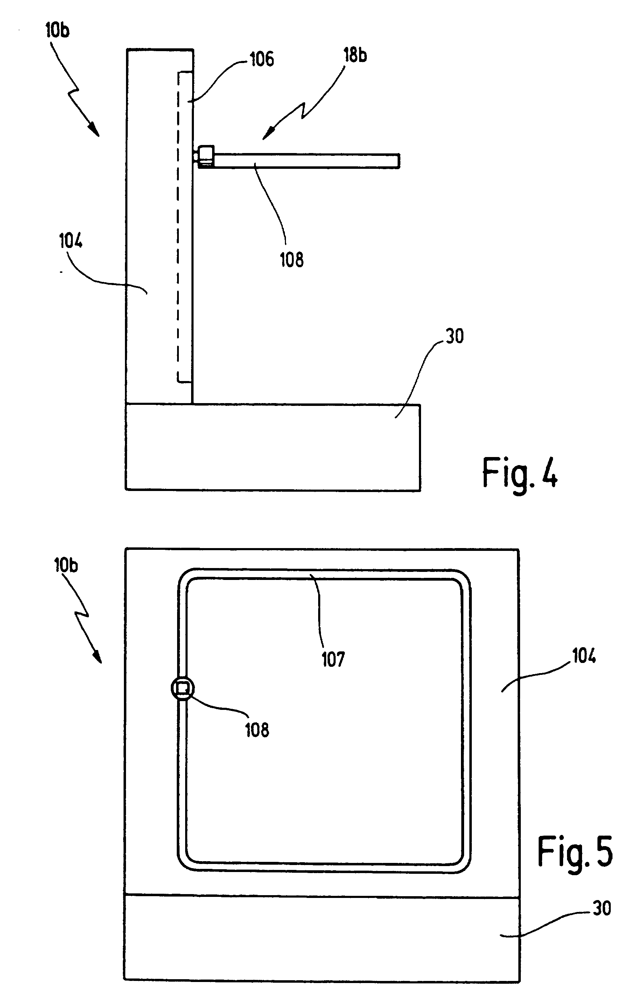

In den Fig. 4 und 5 ist eine weitere nicht von der Erfindung erfaßte Abwandlung der Ausführung gemäß Fig. 3 schematisch dargestellt und insgesamt mit der Ziffer 10b bezeichnet.

Hierbei wurde auf die Darstellung von Stapelwechselmodul und ggf. Portalmodul verzichtet.

Im Unterschied zu der Ausführung gemäß Fig. 3 ist hierbei nur ein Ständer 104 vorgesehen, der zusammen mit dem Sockelmodul 30 eine L-förmige Konfiguration bildet. In den Ständer 104 ist ein Schleppantrieb 106 mit einer Schleppkette integriert, die um eine annähernd quadratische Bahn geführt ist und von der ein Greifermodul 108 angetrieben ist, das über einen Schlitz 107 gemäß Fig. 5 in der Oberfläche des Ständers 104 mit der Schleppkette verbunden ist. Insgesamt läßt sich auf diese Weise ein besonders einfacher und kostengünstiger Antrieb des Greifermoduls 18b erreichen, um das Aufnehmen, Anheben und Umstapeln von Werkstückträgern zu ermöglichen. Der Antrieb ist hierbei in an sich bekannter Weise wie bei Paternosteraufzügen gebräuchlich ausgelegt.

Die einzelnen Funktionsmodule und sonstigen Komponenten wie Ständer und dgl. sind vorzugsweise mit standardisierten mechanischen und/oder elektrischen Schnittstellen versehen, um eine modulare Bauweise der Automationszelle zu ermöglichen.

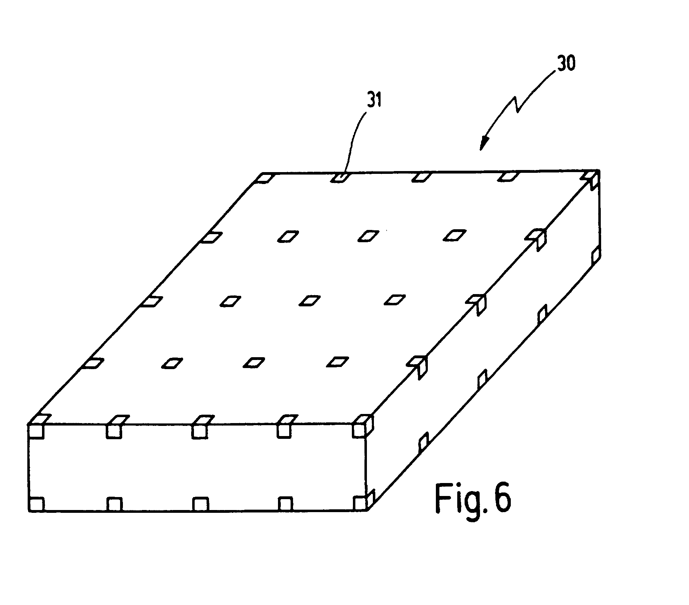

Dies ist schematisch anhand von Fig. 6 dargestellt.

Fig. 6 zeigt einen Sockelmodul 30 schematisch in perspektivischer Darstellung.

Der Sockelmodul 30 ist mit einer Mehrzahl von Schnittstellen 31 versehen, die schachbrettmusterartig auf seiner Oberfläche und an den Seitenflächen angeordnet sind. Diese Schnittstellen 31 können sowohl als mechanische Schnittstellen, d.h. als paßgenau bearbeitete Funktionsflächen ausgebildet sein, um an verschiedenen Stellen des Sockelmoduls 30 einen Aufbau oder Anbau von anderen Funktionsmodulen zu ermöglichen, ohne daß hierzu weitere Befestigungskomponenten, Streben, Stützen oder dgl. erforderlich sind. Diese mechanischen Schnittstellen können auch als mit einem entsprechenden Gegenelement selbstzentrierende Funktionsflächen ausgebildet sein. Ferner können diese Schnittstellen 31 alternativ oder auch zusätzlich als elektrische bzw. elektronische Schnittstellen ausgebildet sein, die eine einheitliche Steuerung der einzelnen Funktionsmodule über das zentrale Steuermodul 58 ermöglichen.

Auf diese Weise läßt sich eine Automationszelle den gewünschten Bedürfnissen in optimaler Weise anpassen, wobei auch eine nachträgliche Umrüstung oder Erweiterung in einfacher Weise ermöglicht wird.

## Patentansprüche

1. Automationszelle zur Handhabung von Teilen, mit einem Bereitstellungsmodul (18a) zur Bereitstellung und zur Aufnahme von Teilen (70), und mit mindestens einem weiteren Funktionsmodul (42) zur Handhabung von Teilen (70), wobei ein ortsfest in einer Einbaulage abstützbarer Sockelmodul (30) vorgesehen ist, an dem der Bereitstellungsmodul (18a) und der zumindest eine weitere Funktionsmodul (42) befestigt sind, **dadurch gekennzeichnet, daß** der Sockelmodul (30) mit einem vertikalen Ständer (90, 92) kombiniert ist, an dem der Bereitstellungsmodul (18a) aufgenommen ist, und daß am Ständer (90, 92) eine Horizontalachse (98, 100) und/oder eine Vertikalachse (94, 96) zum Antrieb des Bereitstellungsmoduls (18a) vorgesehen ist.

2. Automationszelle nach Anspruch 1, **dadurch gekennzeichnet, daß** der Sockelmodul (30) als derart stabile und verwindungssteife Konstruktion ausgeführt ist, daß die Relativlage des Bereitstellungsmoduls (18a) und des zumindest einen weiteren Funktionsmoduls (42) bei einer Vormontage ausreichend genau zueinander bestimmbar ist, ohne daß in der Einbaulage eine aufwendige Endjustierung der einzelnen Module (18a, 42) zueinander erfolgen muß.

3. Automationszelle nach Anspruch 1 oder 2, **gekennzeichnet durch** eine standardisierte mechanische und/oder elektrische Schnittstelle (31), die vorzugsweise am Sockelmodul (30) und an den Funktionsmodulen (42) zur modularen Verbindung vorgesehen ist.

4. Automationszelle nach Anspruch 1, 2 oder 3, **dadurch gekennzeichnet, daß** der Sockelmodul (30) eine als Ölauffangwanne ausgebildete Oberfläche (32) aufweist.

5. Automationszelle nach Anspruch 3 oder 4, **dadurch gekennzeichnet, daß** der Sockelmodul (30) Kabelführungen (33) zur Aufnahme von Leitungen (54) aufweist.

6. Automationszelle nach einem der vorhergehenden Ansprüche, **dadurch gekennzeichnet, daß** als weiterer Funktionsmodul zumindest ein Portalmodul (42) an dem Sockelmodul (30) befestigt ist.

7. Automationszelle nach einem der vorhergehenden Ansprüche, **dadurch gekennzeichnet, daß** eine Schutzverkleidung (16) vorgesehen ist, die an dem Sockelmodul (30) befestigt ist.

8. Automationszelle nach einem der vorhergehenden Ansprüche, **dadurch gekennzeichnet, daß** ein Steuerungsmodul (58) zur Steuerung der Automationszelle (10) vorgesehen ist, der an dem Sockelmodul (30) befestigt ist.

9. Automationszelle nach einem der vorhergehenden Ansprüche, **dadurch gekennzeichnet, daß** der Sockelmodul (30) Aufhängepunkte (56) zur Befestigung an einem Hebezeug aufweist.

10. Automationszelle nach einem der vorhergehenden Ansprüche, **dadurch gekennzeichnet, daß** der Sockelmodul (30) eine Mehrzahl von Anschlußpunkten (74, 76, 78) an vorgegebenen Stellen zur Aufnahme verschiedener Funktionsmodule (18a, 42) aufweist.

11. Automationszelle nach einem der vorhergehenden Ansprüche,
**dadurch gekennzeichnet, daß** der Sockelmodul (30) als Gußoder Schweißkonstruktion mit Versteifungsstreben (34) ausgeführt ist.

12. Automationszelle nach einem der vorhergehenden Ansprüche **dadurch gekennzeichnet, daß** der Sockelmodul (30) mit dem Ständer zu einer L-Form kombiniert ist.

13. Automationszelle nach Anspruch 12, **dadurch gekennzeichnet, daß** der Sockelmodul (30) mit einem ersten (90) und einem zweiten (92) gegenüberliegenden Ständer zu einer U-Form kombiniert ist.

14. Automationszelle nach einem der vorhergehenden Ansprüche, **dadurch gekennzeichnet, daß** der Bereitstellungsmodul (18a) zwischen dem ersten (90) und dem zweiten (92) Ständer angeordnet und an beiden Ständern (90, 92) abgestützt ist.

15. Automationszelle nach Anspruch 14, **dadurch gekennzeichnet, daß** der Bereitstellungsmodul (18a) von beiden Ständern (90, 92) angetrieben ist.

## Claims

1. Automation cell for handling parts, having a preparation module (18a) for preparing and picking up parts (70), and having at least one further functional module (42) for handling parts (70), there being provided a pedestal module (30), which can be stationarily supported in an installation position and to which the preparation module (18a) and the at least one further functional module (42) are fastened, **characterised in that** the pedestal module (30) is combined with an upright (90, 92), on which the preparation module (18a) is held, and **in that** there is provided on the upright (90, 92) a horizontal axis (98, 100) and/or a vertical axis (94, 96) for driving the preparation module (18a).

2. Automation cell according to Claim 1, **characterised in that** the pedestal module (30) is designed as a structure with such stability and torsional resistance that the relative position of the preparation module (18a) and of the at least one further functional module (42) with respect to one another can be defined sufficiently accurately during a preassembly so that there is no need to carry out elaborate final adjustment of the individual modules (18a, 42) in the installation position.

3. Automation cell according to Claim 1 or 2, **characterised by** a standardised mechanical and/or electrical interface (31), which is preferably provided on the pedestal module (30) and on the functional modules (42) for modular connection.

4. Automation cell according to Claim 1, 2 or 3, **characterised in that** the pedestal module (30) has a surface (32) designed as an oil-collecting trough.

5. Automation cell according to Claim 3 or 4, **characterised in that** the pedestal module (30) has cable ducts (33) for receiving lines (54).

6. Automation cell according to one of the preceding claims, **characterised in that**, as a further functional module, at least one gantry module (42) is fastened to the pedestal module (30).

7. Automation cell according to one of the preceding claims, **characterised in that** there is provided a protective covering (16), which is fastened to the pedestal module (30).

8. Automation cell according to one of the preceding claims, **characterised in that** there is provided a control module (58) for controlling the automation cell (10), which control module is fastened to the pedestal module (30).

9. Automation cell according to one of the preceding claims, **characterised in that** the pedestal module (30) has suspension points (56) for fastening to a hoist.

10. Automation cell according to one of the preceding claims, **characterised in that** the pedestal module (30) has a plurality of connection points (74, 76, 78) at preset locations for receiving different functional modules (18a, 42).

11. Automation cell according to one of the preceding claims, **characterised in that** the pedestal module (30) is designed as a cast or welded structure with stiffening braces (34).

12. Automation cell according to one of the preceding claims, **characterised in that** the pedestal module (30) is combined with the upright to form an L-shape.

13. Automation cell according to Claim 12, **characterised in that** the pedestal module (30) is combined with a first upright (90) and a second, opposite, upright (92) to form a U-shape.

14. Automation cell according to one of the preceding claims, **characterised in that** the preparation module (18a) is arranged between the first upright (90) and the second upright (92) and is supported on both uprights (90, 92).

15. Automation cell according to Claim 14, **characterised in that** the preparation module (18a) is driven by both uprights (90, 92).

## Revendications

1. Cellule d'automatisation servant à manipuler des pièces, comprendant un module d'approvisionnement (18a) destiné à mettre à disposition et à recevoir des pièces (70), et comprenant au moins un autre module fonctionnel (42) destiné à manipuler des pièces (70), un module formant socle (30), sur lequel le module d'approvisionnement (18a) et l'autre module fonctionnel (42), au nombre minimum d'un, sont fixés, étant prévu et étant susceptible d'être monté fixement dans une position de montage, **caractérisée en ce que** le module formant socle (30) est combiné à un montant vertical (90, 92) sur lequel le module d'approvisionnement (18a) est reçu, et **en ce qu'**est prévu, sur le montant (90, 92), un axe horizontal (98, 100) et/ou un axe vertical (94, 96) pour entraîner le module d'approvisionnement (18a).

2. Cellule d'automatisation selon la revendication 1, **caractérisée en ce que** le module formant socle (30) est conformé en construction tellement stable et indéformable que les positions relatives du module d'approvisionnement (18a) et de l'autre module fonctionnel (42), au nombre minimum d'un, lors d'un prémontage, peuvent être déterminées l'une par rapport à l'autre avec suffisamment de précision, pour ne pas avoir à procéder, dans la position de montage, à un coûteux ajustement final des différents modules (18a, 42).

3. Cellule d'automatisation selon la revendication 1 ou 2, **caractérisée par** une interface mécanique et/ou électrique standard (31) qui est, de préférence, prévue sur le module formant socle (30) et sur les modules fonctionnels (42), afin d'assurer une liaison modulaire.

4. Cellule d'automatisation selon la revendication 1, 2 ou 3, **caractérisée en ce que** le module formant socle (30) présente une surface (32) conformée en bac collecteur d'huile.

5. Cellule d'automatisation selon la revendication 3 ou 4, **caractérisée en ce que** le module formant socle (30) présente un circuit de câblage (33) destiné à recevoir des conducteurs (54).

6. Cellule d'automatisation selon l'une des revendications précédentes, **caractérisée en ce qu'**au moins un module formant portique (42), servant de module fonctionnel supplémentaire, est fixé sur le module formant socle (30).

7. Cellule d'automatisation selon l'une des revendications précédentes, **caractérisée en ce qu'**est prévu un habillage de protection (16) qui est fixé sur le module formant socle (30).

8. Cellule d'automatisation selon l'une des revendications précédentes, **caractérisée en ce qu'**est prévu un module de commande (58) pour commander la cellule d'automatisation (10), qui est fixé sur le module formant socle (30).

9. Cellule d'automatisation selon l'une des revendications précédentes, **caractérisée en ce que** le module formant socle (30) présente des points de suspension (56) destinés à la fixation sur un dispositif de levage.

10. Cellule d'automatisation selon l'une des revendications précédentes, **caractérisée en ce que** le module formant socle (30) présente une pluralité de points de connexion (74, 76, 78), en des emplacements prédéterminés, pour recevoir différents modules fonctionnels (18a, 42).

11. Cellule d'automatisation selon l'une des revendications précédentes, **caractérisée en ce que** le module formant socle (30) est conformé en construction en fonte ou soudée, pourvue d'étais de renforcement (34).

12. Cellule d'automatisation selon l'une des revendications précédentes, **caractérisée en ce que** le module formant socle (30) et le montant sont combinés pour donner une forme en L.

13. Cellule d'automatisation selon la revendication 12, **caractérisée en ce que** le module formant socle (30) est combiné à un premier (90) et à un deuxième (92) montant opposé pour donner une forme en U.

14. Cellule d'automatisation selon l'une des revendications précédentes, **caractérisée en ce que** le module d'approvisionnement (18a) est monté entre le premier montant (90) et le deuxième montant (92) et s'appuie sur les deux montants (90, 92).

15. Cellule d'automatisation selon la revendication 14, **caractérisée en ce que** le module d'approvisionnement (18a) est entraîné par les deux montants (90, 92).
